# EUROPÄISCHE PATENTSCHRIFT

(11) **EP 2 464 306 B1**
(45) Veröffentlichungstag und Bekanntmachung des Hinweises auf die Patenterteilung: **24.06.2015**
(21) Anmeldenummer: 10745155.1
(22) Anmeldetag: 09.08.2010
(51) Int. Cl.: A61C 13/00

(54) **Verfahren zur Herstellung einer Total- oder Teil-Zahnprothese**
Method for Manufacturing a full or partial denture prosthesis
Procédé de fabrication d'une prothèse dentaire complète ou partielle

(30) Priorität: 12.08.2009 DE 102009036980; 19.08.2009 DE 102009037916
(43) Veröffentlichungstag der Anmeldung: 20.06.2012
(73) Patentinhaber: Heraeus Kulzer GmbH, 63450 Hanau (DE)
(72) Erfinder: RUPPERT, Klaus, 63477 Maintal (DE); BEYER, Mario, 61350 Bad Homburg (DE)
(74) Vertreter: Bendele, Tanja
(86) Internationale Anmeldenummer: PCT/EP2010/004850
(87) Internationale Veröffentlichungsnummer: WO 2011/018196

(56) Entgegenhaltungen:
- EP-A2- 1 864 627
- WO-A1-2004/098443
- DE-A1- 4 005 570
- US-A- 5 690 490
- US-A1- 2004 204 787

## Beschreibung

Die Erfindung betrifft die Herstellung einer Neagtivform bzw. Einbettung und anschliessende Produktion einer Zahnprothese.

Die Herstellung prothetischer Versorgungen wie Kronen, Brücken, Teil- oder Vollprothesen erfolgt nach an sich bekannten Verfahren. Zu nennen sind z. B. die herkömmlichen Verfahren der Pulver / Flüssigkeitstechnologie, wie sie seit langem bekannt und in der Literatur beschrieben sind (z.B. EP 1 243 230 A2, US 6,881,360 B2 und "Dental Materials", Ullmann's Encyclopedia of Industrial Chemistry, Copyright 2002 by Wiley-VCH Verlag).

Allgemein sind drei unterschiedliche Hauptmaterialklassen zur Herstellung von totalprothetischen Arbeiten bekannt. Dies sind auf Polymethylmethacrylat (PMMA) basierende Zweikomponentenmaterialien [Handelsprodukte Palapress, Paladur (Heraeus Kulzer, DE), SR 3/60 ® Quick (Ivoclar, LI), Degupress ® (Degussa-Hüls, DE)]; PMMA-freie heisshärtende Materialien [Handelsprodukte sind z.B. Paladon ® 65 (Heraeus Kulzer, DE), SR 3/60 ®, SR Ivocap ® (Ivoclar, LI), Lucitone ® (Dentsply, US)] sowie thermoplastisch verarbeitbare Spritzgießmassen.

Die thermoplastischen Materialien werden erhitzt und meist über ein Spritzgussverfahren in einen Hohlraum injiziert. Ein bekanntes Verfahren ist "Polyapress" ®, welches unter anderem von der Fa. Bredent, Senden (DE), vertrieben wird. Es hat nicht an Versuchen gefehlt, Polymere wie etwa PVC, Polyurethan, Polyamid oder Polycarbonat einzusetzen.

EP1864627A2 offenbart ein Verfahren zur Herstellung einer Prothese, indem aus digitalen Daten mittels Rapid-Manufacturing eine geteilte Negativform erstellt wird und in die geöffnete Negativform Konfektionszähne eingesteckt werden. Der verbliebene Hohlraum in der geschlossenen Negativform wird mit Prothesenkunststoff aufgefüllt.

Weiter existieren Verfahren, die auf licht- oder mikrowellenhärtenden 1-Komponenten-Materialien aufbauen (z.B. Versyo.com ® von Heraeus Kulzer). Allen diesen Werkstoffen gemeinsam sind die zur Vorbereitung der Kunststoffverarbeitung notwendigen Arbeiten.

Aus der Zahntechnik sind außerdem schichtaufbauende Verfahren bekannt. Diese werden meist in Verbindung mit lichthärtenden Materialien angewandt, z.B. zur Verblendung von Metallkronen oder zur Erstellung einer Prothese. Vorteile bei diesen Verfahren sind die während des Verfahrens mögliche Kontrolle und die Möglichkeit der Variation der Farben, um möglichst ästhetische zahntechnische Arbeiten zu erhalten.

Es wurden auch Rapid-Prototyping-Verfahren zum Einsatz in der Zahntechnik vorgeschlagen. Dabei wird mit polymerisierbaren Schichten (DE 101 14 290 A1 , DE 101 50 256 A1) oder Ink-Jet-Pulverdruck (US 6,322,728 B1) gearbeitet.

Im Wesentlichen werden bei der Herstellung von Totalprothesen folgende Schritte durchlaufen:
- Abformung durch den Zahnarzt
- Erstellung eines Modells, welches die Kieferform wiedergibt,
- Aufstellung der künstlichen Zähne in Wachs und Modellation des Zahnfleisches,
- Wiedereinprobe und bei Bedarf Korrektur durch den Zahnarzt bzw. das Zahntechniklabor,
- Einbettung der Wachsprothese in Gips, Silikon oder Agar Agar,
- Entfernung des Wachses durch Ausbrühen mit heissem Wasser,
- Auffüllen des entstandenen Hohlraums durch Prothesenkunststoff (z.B. PalaXpress®),
- Härten und Fertigstellen der Zahnprothese.

Zunehmend wird versucht, diesen komplexen Ablauf zu vereinfachen. So hat Heraeus Kulzer auf der IDS 2005 die Aufstellhilfe"Filou ® 28" vorgestellt (EP 1 704 831 A1). Damit gelingt es erstmals, die Zeit zur Aufstellung der künstlichen Zähne in Wachs zu reduzieren.

Weitere Entwicklungen deuten auf eine zunehmende Digitalisierung in der Zahntechnik hin. So wird bereits heute keramischer Zahnersatz durch CAD/CAM-Technologien hergestellt. Digitale Technologien gewinnen auch im zahnärztlichen Dentalbereich zunehmend Verbreitung und Akzeptanz, z.B. Scanning Technologien (Lava C. O. S. von 3M Espe) oder virtuelle Artikulatoren und virtuelle Zahnaufstellungen.

DE 101 14 290 B4 beschreibt Rapid Prototyping-Verfahren für die Dentaltechnik. Rapid Prototyping (deutsch schneller Prototypenbau) ist ein Verfahren zur schnellen Herstellung von Musterbauteilen ausgehend von Konstruktionsdaten.

Rapid-Prototyping-Verfahren sind somit Fertigungsverfahren, die das Ziel haben, vorhandene CAD-Daten möglichst ohne manuelle Umwege oder Formen direkt und schnell in Werkstücke umzusetzen. Die für diese Verfahrensgruppe relevante Datenschnittstelle ist das STL-Format. Die unter dem Begriff des Rapid Prototyping seit den 1980er Jahren bekannt gewordenen Verfahren sind in der Regel Umformverfahren, die das Werkstück schichtweise aus formlosem oder formneutralem Material unter Nutzung physikalischer und / oder chemischer Effekte aufbauen.

Nachteil derartiger schichtaufbauender Verfahren ist, dass immer ein anisotroper Aufbau des Zahnersatzes entsteht, so dass eine Nachbehandlung z.B. durch zusätzliche Lichthärtung oder thermisch notwendig ist, um die nötige Festigkeit zu erreichen. Ein weiterer Nachteil ist, dass eine ästhetische Farbgebung nur sehr schwer möglich ist. Ebenso unvorteilhaft erscheint, bedingt durch den stufenweisen Aufbau, die hiermit erzeugte Oberflächengüte. Die Materialien besitzen eine merkliche, fühlbare Rauhigkeit im Zehntelmillimeter-Bereich.

Es stellt sich die Aufgabe, den oben beschriebenen traditionellen Herstellprozess zu vereinfachen. Dabei sollten die oben beschriebenen Nachteile umgangen oder vermieden werden.

Die Aufgabe wird durch Herstellung einer Negativform einer Total- oder Teil-Zahnprothese gelöst,
- wobei aus den Daten eines digitalisierten, virtuellen Modells, welches die Kiefersituation wiedergibt,
- ein Datensatz der digitalen Zahnaufstellung der Total- oder Teil-Zahnprothese erzeugt wird;
- aus dem mit einem Rapid-Manufacturing- oder Rapid-Prototyping-Verfahren ein Funktionsmodell der Total- oder Teil-Zahnprothese hergestellt wird,
- das in Einbettmasse eingebettet wird, und
- aus der gehärteten Einbettmasse die Negativform hergestellt wird.

Der Begriff Schnelle Fertigung bzw. englisch Rapid-Manufacturing bezeichnet Methoden und Produktionsverfahren zur schnellen und flexiblen Herstellung von Bauteilen und Serien mittels werkzeugloser Fertigung direkt aus den CAD-Daten. Verwendete Materialien sind Glas, Metall Keramik Kunststoffe und neue Materialien (wie UV härtendes Sol-Gel, siehe z.B. Multi Jet Modeling) [...]

Da beim Rapid Manufacturing immer die direkte Herstellung des Endprodukts im Mittelpunkt steht, unterscheidet es sich grundlegend von Rapid Prototyping und Rapid Tooling (Schneller Werkzeugbau).

Wenn man ein Positiv der Zahnprothese z.B. nach dem Rapid-Prototyping-Verfahren als Platzhalter herstellt, kann man dieses Prothesen-Positiv in eine Abformmasse (z.B. Alginat, AgarAgar oder Silikon) einbetten und anschließend entformen. Die entstandene zweiteilige Hohlform kann mit Konfektionszähnen bestückt werden und - nach dem Schließen der beiden Formhälften - der entstandene Hohlraum mit Prothesenwerkstoff ausgegossen werden.

Vorteile des Verfahrens sind:
Es können etablierte Dentalmaterialien wie vorgefertigte Konfektionszähne und bewährte Prothesenwerkstoffe verarbeitet werden.

Es gibt keine Beschränkung der Materialwahl bezüglich funktionaler, ästhetischer und toxikologischer Eigenschaften.

Die Herstellung der Negativform bzw. der Küvette erfolgt nach einem kostengünstigen, konventionellen Gießverfahren und muss nicht zeit- und kostenintensiv schichtweise aufgebaut werden.

Gegenstand der Erfindung ist ein Verfahren zur Herstellung von Total- oder Teil-Zahnprothesen nach einem digitalisierten, virtuellen Modell, welches die Kiefersituation wiedergibt, mit den Schritten:
- (A) Erzeugung eines Datensatzes des virtuellen Modells aus Daten der digitalen Erfassung der Kiefersituation und -relation oder aus der Abformung durch den Zahnarzt;
- (B) digitale Zahnaufstellung unter Verwendung des Datensatzes aus Schritt (A);
- (C) Erzeugung eines Funktionsmodells aus dem Datensatz der digitalen Zahnaufstellung (B) mit einem Rapid-Manufacturing- oder Rapid-Prototyping-Verfahren;
- (D) Einbettung des Funktionsmodells aus Schritt (C) in eine härtbare Abformmasse und Aushärtung der härtbaren Abformmasse;
- (E) Aufschneiden der Einbettung und Entformung des Funktionsmodells aus der ausgehärteten Abformmasse unter Zurückbleiben der Einbettung;
- (F) Einstecken von Konfektionszähnen in die Einbettung;
- (G) Schließen der beiden Formhälften und Auffüllen des verbliebenen Hohlraums mit Prothesenkunststoff (z.B. PalaXpress ®);
- (H) Härten und Fertigstellen der Prothese.

Die Erzeugung des Datensatzes erfolgt entweder durch Erstellung eines Modells, welches die Kieferform wiedergibt, aus der Abformung durch den Zahnarzt und Digitalisierung des Modells oder durch Bereitstellen von Modelldaten aus dem Digitalen Röntgen oder dem intraoralen Scan,

Die automatisierte digitale Aufstellung mit bereits digital eingespeisten 3D-Modellen von künstlichen Zähnen kann erfolgen wie z.B. in DE 103 04 757 B4 beschrieben.

Die digitale Erzeugung eines Funktionsmodells der Prothese aus den Daten des Modells aus Schritt C nach dem Rapid-Prototyping/RapidManufacturing-Verfahren kann optional unter Vorsehung von Gießkanälen erfolgen.

Die Einbetten des Funktionsmodells erfolgt vorzugsweise in Silikon.

Die Erzeugung des Funktionsmodells kann durch Rapid-Manufacturing oder Rapid-PrototypingVerfahren wie Fräsverfahren, 3D-Druckverfahren, Stereolithografie, Lasersintern oder sonstige Rapid-Prototyping-Verfahren erfolgen. Optional kann die Oberfläche des Funktionsmodells nach der Herstellung noch nachbehandelt, insbesondere geglättet und/oder poliert werden. Das Funktionsmodell kann entweder aus einem stabilen Polymer oder einem wachsartigen Material bestehen, welches bei einer optionalen Einprobe im Patientenmund noch leichten geometrischen Korrekturen zugänglich ist.

Die Einbettung des Funktionsmodells erfolgt bevorzugt unter Verwendung eines handelsüblichen Modellbausilikons, ggf. unter Zuhilfenahme von verstärkenden Elementen wie z.B. Gitterstrukturen, welche der Einbettung zusätzliche mechanische Stabilität verleihen und damit die geometrische Passgenauigkeit verbessern. Das Silikon wird so ausgewählt, dass es im ausgehärteten Zustand eine hinreichend hohe Viskosität aufweist, so dass die Form stabil ist und die Konfektionszähne bei den weiteren Verarbeitungsschritten an der vorgesehenen Position gehalten werden. Das Silikon darf aber auch nicht zu fest sein, damit sich die fertiggestellte Prothese ohne Mühe wieder entformen lässt.

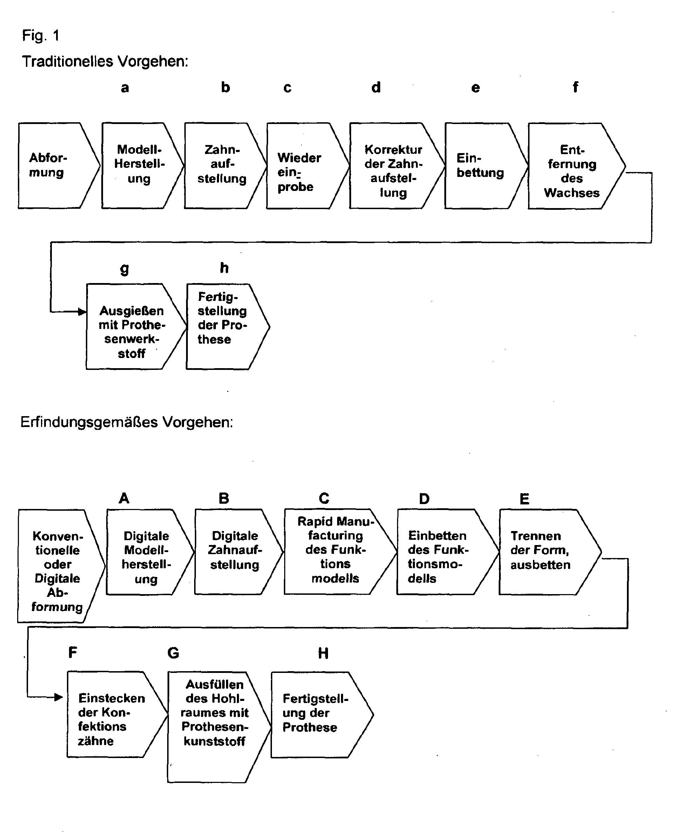

Fig. 1 zeigt ein Fliessbild des erfindungsgemäßen Verfahrens zur Herstellung von Totalprothesen, verglichen mit dem standardmäßigen Vorgehen des Standes der Technik.

Die Erfindung wird anhand des Fliessbildes der Figur 1 näher erläutert: Die Abweichungen vom traditionellen Prozess sind zunächst die Erstellung und Handhabung eines digitalen Modells und dessen virtuelle Handhabung bei der Zahnaufstellung. Derartige Verfahren und entsprechende Vorrichtungen sind z.B. in US 6,152,731 A, US 6,322,359 B1 und DE 103 04 757 B4 beschrieben. Das wesentliche Merkmal der Erfindung ist das Erstellen eines Funktionsmodells durch ein Rapid-Manufacturingoder Rapid-Prototyping-Verfahren.

Das Funktionsmodell wird eingebettet und nach dem Ausbetten ist der Hohlraum für das Giessen der Prothese geschaffen. Da die Zahnaufstellung bereits virtuell stattgefunden hat, können die Prothesenzähne direkt an die vorgesehen Stellen gesteckt werden. Die weitere Verarbeitung (Ausgießen mit Prothesenbasismaterial und Härten) entspricht der traditionellen Methode.

Das erfindungsgemäße Verfahren hat den Vorteil, dass die traditionellen Materialien verarbeitet, aber die Vorteile der virtuellen Artikulation und Zahnaufstellung genutzt werden können.

Eine Wiedereinprobe am Patienten die beim traditionellen Verfahren immer erfolgt, muss nicht zwingend stattfinden. Wenn eine derartige Einprobesitzung entfällt, wird auch das Hin- und Herschicken zwischen Praxis und Dentallabor eingespart.

Das vorgenannte Funktionsmodell lässt sich auch auf die Herstellung von Kronen oder Brücken anwenden, wie z.B. in EP 1 864 627 A2 beschrieben ist.

## Patentansprüche

1. Verfahren zur Herstellung von Total- oder Teil-Zahnprothesen nach einem digitalisierten, virtuellen Modell, welches die Kiefersituation wiedergibt,
mit den Schritten
A Erzeugung eines Datensatzes des virtuellen Modells aus Daten der digitalen Erfassung der Kiefersituation und -relation oder aus der Abformung durch den Zahnarzt;
B digitale Zahnaufstellung unter Verwendung des Datensatzes aus Schritt A;
C Erzeugung eines Funktionsmodells aus dem Datensatz der digitalen Zahnaufstellung B mit einem Rapid-Manufacturing- oder Rapid-Prototyping-Verfahren;
D Einbettung des Funktionsmodells aus Schritt C in eine härtbare Abformmasse und Aushärtung der härtbaren Abformmasse:
E Aufschneiden der Einbettung und Entformung des Funktionsmodells aus der ausgehärteten Abformmasse unter Zurückbleiben der Einbettung;
F Einstecken von Konfektionszähnen in die Einbettung;
G Auffüllen des verbliebenen Hohlraums mit Prothesen kunststoff;
H Härten und Fertigstellen der Prothese.

2. Verfahren nach Anspruch 1, wobei Schritt B automatisiert ist.

3. Verfahren nach Anspruch 1, wobei die härtbare Abformmasse Silikon, Agar-Agar, Alginat oder ein transparenter lichthärtender Kunststoff ist.

4. Verfahren nach Anspruch 1, wobei das Auffüllen des verbliebenen Hohlraums mit Prothesenkunststoff nach einem Injektionsverfahren durchgeführt wird.

5. Verfahren nach Anspruch 1, wobei das Auffüllen des verbliebenen Hohlraums mit Prothesenkunststoff nach dem Stopf-Pressverfahren durchgeführt wird.

6. Verfahren nach Anspruch 1, wobei das Auffüllen des verbliebenen Hohlraums mit Prothesenkunststoff nach dem Gießverfahren durchgeführt wird.

## Claims

1. Method for the production of full or partial dental prostheses according to a digitalised virtual model reflecting the jaw status,
comprising the steps
A generating a data set of the virtual model from data of the digital capture of the jaw status and jaw relation or from the impression taken by the dentist;
B digital tooth set-up based on the data set from step A;
C generating a functional model from the data set of the digital tooth set-up B using a rapid manufacturing or rapid prototyping method;
D investing the functional model from step C in a curable impression material and curing the curable impression material;
E cutting open of the investment and removing the functional model from the cured impression material while the investment stays behind;
F inserting stock teeth into the investment,
G filling the remaining hollow space with denture plastic material;
H curing and finishing the dental prosthesis.

2. Method according to claim 1, whereby step B is automated.

3. Method according to claim 1, whereby the curable impression material is silicone, agar-agar, alginate or a transparent light-curing plastic material.

4. Method according to claim 1, whereby the remaining hollow space is filled with denture plastic material according to an injection method.

5. Method according to claim 1, whereby the remaining hollow space is filled with denture plastic material according to the plugging-pressing method.

6. Method according to claim 1, whereby the remaining hollow space is filled with denture plastic material according to the casting method.

## Revendications

1. Procédé pour la production de prothèses dentaires totales ou partielles, selon un modèle virtuel numérisé reflétant l'état de la mâchoire,
comprenant les étapes consistant à
A générer un ensemble de données du modèle virtuel à partir des données de l'enregistrement numérique de l'état de la mâchoire et de la relation intermaxillaire ou de l'empreinte prise par le dentiste;
B montage des dents numérique basée sur un ensemble de données de l'étape A;
C générer un modèle fonctionnel de l'ensemble de données du montage des dents numérique B en utilisant une fabrication rapide ou une méthode de prototypage rapide;
D investir le modèle fonctionnel de l'étape C dans un matériau d'empreinte durcissable et le durcissement du matériau d'empreinte durcissable;
E couper l'investissement et retirer le modèle fonctionnel du matériau d'empreinte durci tandis que l'investissement reste en arrière;
F insérer des dents confectionnées dans l'investissement;
G remplir l'espace creux restant avec du matériel prothèse en plastique;
H durcir et finir la prothèse dentaire.

2. Procédé selon la revendication 1, dans lequel l'étape B est automatisé,

3. Procédé selon la revendication 1, dans lequel le matériau d'empreinte durcissable est du silicone, de l'agar-agar, de l'alginate ou une matière plastique photopolymérisable transparente.

4. Procédé selon la revendication 1, dans lequel l'espace creux restant est rempli d'un matériau de prothèse en matière plastique selon un procédé d'injection.

5. Procédé selon la revendication 1, dans lequel l'espace creux restant est rempli d'un matériau de prothèse en plastique selon le procédé de pressage de bouchage.

6. Procédé selon la revendication 1, dans lequel l'espace creux restant est rempli d'un matériau de prothèse en plastique selon le procédé de coulée.
